# EUROPÄISCHE PATENTSCHRIFT

(11) **EP 1 302 494 B1**
(45) Veröffentlichungstag und Bekanntmachung des Hinweises auf die Patenterteilung: **07.06.2006**
(21) Anmeldenummer: 02022231.1
(22) Anmeldetag: 02.10.2002
(51) Int. Cl.: C08G 18/66

(54) **Verfahren zur Herstellung von massiven Polyurethan-Formkörpern**
Process for the preparation of bulk polyurethane moulding pieces
Procédé pour la préparation de pièces moulées de polyuréthane pleines

(30) Priorität: 15.10.2001 DE 10150558
(43) Veröffentlichungstag der Anmeldung: 16.04.2003
(73) Patentinhaber: Bayer MaterialScience AG, 51368 Leverkusen (DE)
(72) Erfinder: Hoffmann, Andreas, Dr., 50733 Köln (DE); Neuhaus, Alfred, 42799 Leichlingen (DE); Eisen, Norbert, Dr., 50999 Köln (DE)

(56) Entgegenhaltungen:
- EP-A- 0 581 739
- US-A- 4 028 303
- US-A- 4 358 547

## Beschreibung

Die vorliegende Erfindung betrifft ein Verfahren zur Herstellung von massiven Polyurethan-Formkörpem, welche aufgrund der hohe Eigensteifigkeit (Biege-E-Modul > 1800 N/mm² gemäß DIN 53 457) dünne Wandstärken sowie eine komplexe Geometrie aufweisen dürfen und sich durch Umsetzung von ausgewählten organischen Polyisocyanaten mit ausgewählten Verbindungen mit gegenüber Isocyanatgruppen reaktionsfähigen Gruppen nach dem Gießverfahren herstellen lassen.

Polyurethan-Vergussmassen sind seit langem bekannt (vgl. z.B. Kunststoff-Handbuch, Band VII "Polyurethane", 3. Auflage ", Carl Hanser Verlag, München / Wien, 1993, Seite 417ff. bzw. Seite 474ff.). Es handelt sich dabei im wesentlichen um Reaktionsgemische aus einer Polyisocyanat-Komponente und einer Polyol-Komponente, welche die üblichen Hilfs- und Zusatzmittel wie wasserabsorbierende Substanzen, Füllstoffe und dergleichen enthält. Je nach Zusammensetzung der Vergussmassen können Formkörper für die unterschiedlichsten Einsatzgebiete hergestellt werden. Die Verarbeitung der Polyurethan-Rohstoffe kann im Prinzip nach verschiedenen Verfahren erfolgen. Im einfachsten Fall erfolgt eine offene, drucklose Befüllung der Werkzeuge, wobei alle gängigen Werkzeug-Typen, u.a. preiswerte Werkzeuge aus Epoxidharz, verwendet werden können.

Katalysator - freie, schnell härtende, massive Polyurethan-Gießharzsysteme (Dichte > 1,0 g/cm³) werden in US-A 3 966 662 beschrieben. Das System besteht aus einem Amin-gestarteten Polyol, einem aromatischen Polyisocyanat und einem flüssigen inerten Modifizierungsmittel. Als Modifizierungsmittel finden Polyoxyalkylene, Carbonate, Ester, substituierte Aromaten, halogenierte Aliphaten, organische Phosphate, Sulfone, etc. Verwendung. Die Gießharzsysteme härten ohne äußere Wärmezufuhr in weniger als 5 Minuten zu gut entformbaren Formteilen aus. Als Beispiel wird u.a. die Umsetzung von Diethylentriamin-gestartetem Polyether mit Toluoldiisocyanat in Gegenwart eines inaktiven Polyethers (Molekulargewicht: 1500; Funktionalität: 3) als Modifizierungsmittel beschrieben.

US-A 4 476 292 offenbart klare, harte und schlagzähe Polyurethan-Gießharzsysteme. Das System besteht aus einem Prepolymer, hergestellt aus einem Amin-gestarteten Polyetherpolyol und einem Überschuss eines (cyclo-)aliphatischen Polyisocyanats, und einem Polyoxyalkylenetherpolyol, welches gegebenenfalls in Kombination mit einem Amin-gestarteten Polyol eingesetzt wird. Jedoch ist unter wirtschaftlichen Gesichtspunkten die Verwendung von Prepolymeren und/oder (cyclo-)aliphatischen Polyisocyanaten nachteilig.

EP-A 265 781 beschreibt ein Verfahren zur Herstellung von Polyurethan-Formkörpern mit einer Dichte von 0,8-1,4 g/cm³ durch Umsetzung von Polyisocyanaten der Diphenylmethanreihe mit ausgewählten Verbindungen mit gegenüber Isocyanatgruppen reaktionsfähigen Gruppen, wobei als Reaktionspartner u.a. Polyetherpolyole verwendet werden, die ein Molekulargewicht von 500 bis 999 g/mol und mindestens 30 Gew.-% an in Polyetherketten eingebaut vorliegenden Ethylenoxid-Einheiten aufweisen. Weiterhin wird die Art und die Mengenverhältnisse der Verbindungen mit gegenüber Isocyanatgruppen reaktionsfähigen Gruppen so gewählt, dass die mittlere Hydroxylzahl des aus diesen Komponenten gebildeten Gemisches größer als 300 ist. Die Umsetzung der Reaktionspartner ermöglicht die Herstellung von Formkörpern mit komplexer Geometrie und hoher Oberflächenqualität. Der Werkstoff besitzt auch bei dünnen Wandstärken eine hohe Eigensteifigkeit und gute Festigkeit (Biege-E-Modul: > 1800 N/mm²). Die Verarbeitung der Polyurethan-Rohstoffe erfolgt mit Hilfe der Reaktionsspritzgusstechnik (RIM-Prozess). Das Verfahren erlaubt allerdings nur kurze Reaktionszeiten, wodurch das Gewicht der hergestellten Formkörper limitiert ist. Darüber hinaus sind die eingesetzten Werkzeuge (i. d. R. aus Aluminium oder Stahl), der Werkzeugträger und die Verfahrenstechnik, verglichen mit den oben beschriebenen Gießverfahren, relativ aufwendig und kostenintensiv.

Es war daher die der Erfindung zugrundeliegende Aufgabe, ein einfaches und preiswertes Verfahren zur Herstellung massiver Polyurethan-Formkörper zur Verfügung zu stellen, die dünne Wandstärken sowie eine komplexe Geometrie aufweisen dürfen.

Gegenstand der Erfindung ist ein neues Verfahren zur Herstellung von massiven Polyurethan-Formkörpern mit einem Biege-E-Modul > 1800 N/mm² (gemäß DIN 53 457) nach dem Gießverfahren, bei dem
a) Di- und/oder Polyisocyanate der Diphenylmethanreihe mit einer Polyolkomponente enthaltend
b) 30 bis 70 Gew.-%, bezogen auf das Gewicht der Komponenten b) bis d), an Polyetherpolyolen mit einem zahlenmittleren Molekulargewicht von 149 bis 999 g/mol, bevorzugt 200 bis 500 g/mol, die mit aliphatischen Aminen, bevorzugt Ethylendiamin gestartet sind,
c) 25 bis 50 Gew.-%, bezogen auf das Gewicht der Komponenten b) bis d), an Polyethern mit einem zahlenmittleren Molekulargewicht von 1000 bis 16000 g/mol, bevorzugt 2000 bis 6000 g/mol, mit mindestens einer gegenüber Isocyanatgruppen reaktionsfähigen Gruppe, die höchstens 80 % bevorzugt höchstens 5 % an primären Hydroxylgruppen aufweisen,
d) 0 bis 30 Gew.-%, bezogen auf das Gewicht der Komponenten b) bis d), an mit Polyhydroxylverbindungen gestarteten Polyetherpolyolen mit einem (zahlenmittleren) Molekulargewicht von 62 bis 999 g/mol, gegebenenfalls in Gegenwart von
e) die Isocyanat-Additionsreaktion beschleunigenden Katalysatoren, und gegebenenfalls
f) aus der Polyurethanchemie bekannten Hilfs- und Zusatzstoffen,
umgesetzt werden, wobei man die Art und Mengenverhältnisse der Komponenten b) bis d) so wählt, dass die mittlere Hydroxylzahl des aus diesen Komponenten gebildeten Gemischs größer als 300 mg KOH/g ist.

Bei den Ausgangskomponenten a) handelt es sich um bei Raumtemperatur flüssige Di- und/oder Polyisocyanate der Diphenylmethanreihe. Hierzu gehören die bei Raumtemperatur flüssigen Derivate des 4,4'-Diisocyanatodiphenylmethans, z.B. Urethangruppen aufweisende Polyisocyanate, wie sie gemäß DE-PS 16 18 380 durch Umsetzung von 1 Mol 4,4'-Diisocyanatodiphenylmethan mit 0,05 bis 0,3 Mol niedermolekularen Diolen oder Triolen, vorzugsweise Polypropylenglykolen mit einem unter 700 liegenden Molekulargewicht zugänglich sind oder Carbodiimid- und/oder Uretonimingruppen aufweisende Diisocyanate auf Basis von 4,4'-Diisocyanatodiphenylmethan, wie sie beispielsweise gemäß US-PS 3 449 256, zugänglich sind. Ebenfalls gut geeignet sind bei Raumtemperatur flüssige und gegebenenfalls entsprechend modifizierte Gemische von 4,4'-Diisocyanatodiphenylmethan mit 2,4'- und gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höheren Homologe enthalten, und die in an sich bekannter Weise durch Phosgenierung von Anilin/Formaldehyd-Kondensaten zugänglich sind. Auch Urethan- und/oder Carbodiimidgruppen aufweisende Modifizierungsprodukte dieser Polyisocyanatgemische sind geeignet. Gut geeignet sind auch Umsetzungsprodukte derartiger Di- und/oder Polyisocyanate mit als interne Trennmittel wirkenden Fettsäureestern, wie sie in DE-OS 2 319 648 beschrieben sind. Auch Allophanat- bzw. Biuretgruppen aufweisende Modifizierungsprodukte der genannten Di- und Polyisocyanate sind als Komponente a) geeignet. Die Polyisocyanatkomponente a) weist im Allgemeinen eine mittlere NCO-Funktionalität von 2,0 bis 3,5, vorzugsweise 2,5 bis 3,3 auf.

Bei der Komponente b) handelt es sich um Amin-gestartete Polyetherpolyole bzw. Gemische von Amin-gestarteten Polyetherpolyolen eines (zahlenmittleren) Molekulargewichts von 149 bis 999 g/mol, bevorzugt 200 bis 500 g/mol. Geeignete Polyether b) sind beispielsweise solche, die auf an sich bekannte Weise durch Anlagerung von Alkylenoxiden an Startermoleküle erhältlich sind. Bevorzugte Starterverbindungen sind Ammoniak oder Verbindungen, die mindestens eine primäre oder sekundäre Aminogruppe aufweisen, beispielsweise aliphatische Amine wie 1,2-Diaminoethan, Oligomere des 1,2-Diaminoethans (beispielsweise Diethylentriamin, Triethylentetramin oder Pentaethylenhexamin), Ethanolamin, Diethanolamin, 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminohexan oder aromatische Amine wie 1,2-Diaminobenzol, 1,3-Diaminobenzol, 1,4-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder aromatische Amine, die durch säurekatalysierte Kondensierung von Anilin mit Formaldehyd erhalten werden. Die Starterverbindungen können allein oder im Gemisch verwendet werden. Bevorzugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Näheres ist "Ullmanns Encyclopädie der industriellen Chemie", Band A21, 1992, S. 670ff. zu entnehmen. Wesentlicher Punkt ist, dass als Startermolekül bevorzugt aliphatische Polyamine, besonders bevorzugt Ethylendiamin, Verwendung finden und die Komponente b) in einer Menge von 30 bis 70 Gew.-%, bezogen auf das Gewicht der Komponenten b) bis d), eingesetzt wird.

Bei der Komponente c) handelt es sich um einen 1 bis 8 primäre und/oder sekundäre Hydroxylgruppen aufweisenden Polyether mit einem zahlenmittleren Molekulargewicht von 1000 bis 16000 g/mol, vorzugsweise 2000 bis 6000 g/mol. Bevorzugt weist das Polyol eine mittlere OH-Funktionalität von 1,5 bis 3,5 und einen Gehalt an primären OH-Gruppen von < 80 %, besonders bevorzugt < 5 %, auf. Besonders bevorzugt handelt es sich bei der Komponente c) um solche Polyetherpolyole, die unter ausschließlicher Verwendung von Propylenoxid als Alkylenoxid bei der Alkoxylierungsreaktion erhalten worden sind.

Die erfindungsgemäß eingesetzten Poly(oxyalkylen)polyole c) können in an sich bekannter Weise durch Polyaddition von Alkylenoxiden an polyfunktionelle Starterverbindungen in Gegenwart geeigneter Katalysatoren hergestellt werden. Bevorzugt werden die erfindungsgemäß eingesetzten Poly(oxyalkylen)polyole mittels eines hochaktiven Doppelmetallcyanidkatalysators aus einer Starterverbindung mit durchschnittlich 1 bis 8, bevorzugt 1,5 bis 3,5, aktiven Wasserstoffatomen und einem oder mehreren Alkylenoxiden hergestellt, wie dies beispielsweise in EP-A 761 708 beschrieben ist. Bevorzugte Starterverbindungen sind Moleküle mit zwei bis acht Hydroxylgruppen pro Molekül wie Wasser, Triethanolamin, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerol, Trimethylolpropan, Pentaerythrit, Sorbit und Saccharose. Die Starterverbindungen können allein oder im Gemisch verwendet werden. Bevorzugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Näheres ist "Ullmanns Encyclopädie der industriellen Chemie", Band A21, 1992, S. 670ff. zu entnehmen.

Ebenfalls geeignet sind solche höhermolekularen Polyhydroxypolyether, in denen hochmolekulare Polyaddukte bzw. Polykondensate oder Polymerisate in feindisperser, gelöster oder aufgepropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt (wie beispielsweise in DE-AS 11 68 075 beschrieben). Auch durch Vinylpolymerisate modifizierte Polyhydroxylverbindungen, wie sie z.B. durch Polymerisation von Styrol und Acrylnitril in Gegenwart von Polyethern (z.B. gemäß US-PS 3 383 351) oder Polycarbonatpolyolen (z.B. nach US-PS 3 637 909) erhalten werden, sind für das erfindungsgemäße Verfahren als Komponente c) geeignet.

Vertreter der genannten erfindungsgemäß als Komponente c) zu verwendenden Verbindungen sind z.B. im Kunststoff-Handbuch, Band VII "Polyurethane", 3. Auflage ", Carl Hanser Verlag, München / Wien, 1993, Seiten 57 - 67 bzw. Seiten 88 - 90 beschrieben.

Wesentlich ist, dass die Komponente c) in einer Menge von 25 bis 50 Gew.-%, bezogen auf das Gewicht der Komponenten b) bis d), eingesetzt wird.

Bei der gegebenenfalls mit zu verwendenden Komponente d) handelt es sich um einem 1 bis 8 primäre und/oder sekundäre Hydroxylgruppen aufweisenden Polyether mit einem zahlenmittleren Molekulargewicht von 62 bis 999. Bevorzugt weist der Polyether eine mittlere OH-Funktionalität von 1,5 bis 3,5 auf. Besonders bevorzugt handelt es sich bei der Komponente d) um solche Polyetherpolyole, die einen hohen Anteil an primären Hydroxylgruppen aufweisen oder unter ausschließlicher Verwendung von Ethylenoxid als Alkylenoxid bei der Alkoxylierungsreaktion erhalten worden sind.

Die erfindungsgemäß eingesetzten Poly(oxyalkylen)polyole d) können in an sich bekannter Weise durch Polyaddition von Alkylenoxiden an polyfunktionelle Starterverbindungen in Gegenwart geeigneter Katalysatoren hergestellt werden. Bevorzugte Starterverbindungen sind Moleküle mit zwei bis acht Hydroxylgruppen pro Molekül wie Wasser, Triethanolamin, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerol, Trimethylolpropan, Pentaerythrit, Sorbit oder Saccharose. Die Starterverbindungen können allein oder im Gemisch verwendet werden. Bevorzugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen. Näheres ist "Ullmanns Encyclopädie der industriellen Chemie", Band A21, 1992, S. 670ff. zu entnehmen.

Als Katalysatoren e), die gegebenenfalls mitverwendet werden, kommen insbesondere tertiäre Amine der an sich bekannten Art in Frage, z.B. Triethylamin, Tributylamin, N-Methylmorpholin, N-Ethylmorpholin, N-Cocomorpholin, N,N,N',N'-Tetramethylethylendiamin, 1,4-Diazabicyclo[2.2.2]octan, N-Methyl-N'-dimethylaminoethylpiperazin, N,N-Dimethylcyclohexylamin, N,N,N',N'-Tetramethyl-1,3-butandiamin, N,N-Dimethylimidazol-β-phenylethylamin, 1,2-Dimethylimidazol oder 2-Methylimidazol. Auch organische Metallkatalysatoren, insbesondere organische Zinnkatalysatoren, wie z.B. Zinn-(II)-salze von Carbonsäure wie Zinn-(II)-acetat, Zinn-(II)-octoat, Zinn-(II)-ethylhexoat und Zinn-(II)-laurat und die Dialkylzinnsalze von Carbonsäuren, wie z.B. Dibutylzinndiacetat, Dibutylzinndilaurat, Dibutylzinnmaleat oder Dioctylzinndiacetat können allein oder in Kombination mit den tertiären Aminen verwendet werden. Vorzugsweise werden 0,01 bis 5 Gew.-%, insbesondere 0,05 bis 2 Gew.-% Katalysator bzw. Katalysatorkombination, bezogen auf die Summe des Gewichts der Komponenten b) bis f) eingesetzt. Weitere Vertreter von Katalysatoren sowie Einzelheiten über die Wirkungsweise der Katalysatoren sind im Kunststoff-Handbuch, Band VII "Polyurethane", 3. Auflage ", Carl Hanser Verlag, München / Wien, 1993 auf den Seiten 104 - 110 beschrieben.

Zu den Hilfs- und Zusatzstoffen f), die gegebenenfalls mitverwendet werden, gehören beispielsweise wasserabsorbierende Substanzen, oberflächenaktive Substanzen, Stabilisatoren sowie interne Formtrennmittel.

Als wasserabsorbierende Substanzen geeignet sind sowohl gegenüber Wasser hochreaktive Verbindungen, wie z.B. Tris(chlorethyl)orthoformat, wie auch wasserbindende Füllstoffe, z.B. Erdalkalioxide, Zeolithe, Aluminiumoxide und Silikate.

Als oberflächenaktive Substanzen kommen Verbindungen in Betracht, welche zur Unterstützung der Homogenisierung der Ausgangsstoffe dienen, beispielsweise die Natriumsalze von Fettsäuren sowie Salze von Fettsäuren mit Aminen, z.B. ölsaures Diethylamin oder stearinsaures Diethanolamin.

Als Stabilisatoren kommen vor allem wasserlösliche Polyethersiloxane in Frage. Diese Verbindungen sind im Allgemeinen so aufgebaut, dass ein Copolymerisat aus Ethylenoxid und Propylenoxid mit einem Polydimethylsiloxanrest verbunden ist. Derartige Stabilisatoren sind z.B. in der US-PS 2 764 565 beschrieben.

Zu den gegebenenfalls mitzuverwendenden Hilfsmitteln f) gehören auch die an sich bekannten inneren Formtrennmittel, wie sie beispielsweise in DE-OS 24 04 310 beschrieben sind. Bevorzugte Trennmittel sind Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen, gesättigte und/oder ungesättigte COOH- und / oder OH-Gruppen aufweisende Ester von mono- und/oder polyfunktionellen Carbonsäuren und polyfunktionellen Alkoholen mit Hydroxyl- oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, Fette oder Wachse. Besonders bevorzugt sind das Ölsäure- oder Tallölfettsäuresalze des amidgruppenhaltigen Amins, das durch Umsetzung von N-Dimethylaminopropylamin mit Ölsäure oder Tallölfettsäure erhalten worden ist, bzw. das Salz aus 2 Mol Ölsäure und 1 Mol 1,4-Diazabicyclo[2.2.2]octan.

Neben diesen beispielhaft genannten, bevorzugt einzusetzenden Trennmitteln können prinzipiell beim erfindungsgemäßen Verfahren auch andere an sich bekannte Trennmittel des Standes der Technik allein oder im Gemisch mit den bevorzugten, beispielhaft genannten Trennmitteln eingesetzt werden. Zu diesen weiterhin geeigneten Trennmitteln gehören beispielsweise die Umsetzungsprodukte aus Fettsäureestem und Polyisocyanaten gemäß DE-OS 23 07 589, die Umsetzungsprodukte aus reaktionsfähige Wasserstoffatome aufweisenden Polysiloxanen mit Mono- und/oder Polyisocyanaten gemäß DE-OS 23 56 692, Ester von Hydroxymethylgruppen aufweisenden Polysiloxanen mit Mono- und/oder Polycarbonsäuren gemäß DE-OS 23 63 452 und Salze aus Aminogruppen enthaltenden Polysiloxanen und Fettsäuren gemäß DE-OS 24 31 968. Die genannten internen Formtrennmittel werden, falls überhaupt, in einer Menge von bis zu 15 Gew.-%, vorzugsweise bis zu 10 Gew.-%, bezogen auf das gesamte Reaktionsgemisch, eingesetzt.

Weitere, gegebenenfalls mitzuverwendende Zusatzstoffe f) sind beispielsweise Füllstoffe. Als Füllstoffe, insbesondere verstärkend wirkende Füllstoffe, seien beispielhaft genannt: silikatische Mineralien, beispielsweise Schichtsilikate wie Antigorit, Serpentin, Hornblenden, Amphibile, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden natürliche und synthetische faserförmige Mineralien wie Asbest, Wollastonit und insbesondere Glasfasern verschiedener Länge, die gegebenenfalls geschlichtet sein können. Füllstoffe können einzeln oder als Gemische verwendet werden. Die Füllstoffe werden, falls überhaupt, der Reaktionsmischung vorteilhafterweise in Mengen von bis zu 50 Gew.-%, vorzugsweise bis zu 30 Gew.-%, bezogen auf das Gewicht der Komponenten b) bis f), zugegeben.

Geeignete, gegebenenfalls mitzuverwendende Flammschutzmittel sind beispielsweise Trikresylphophat, Tris-2-chlorethylphosphat, Tris-chlorpropylphosphat und Tris-2,3-dibrompropylphosphat. Außer den bereits genannten halogensubstituierten Phosphaten können auch anorganische Flammschutzmittel, wie Aluminiumoxidhydrat, Ammoniumpolyphosphat und Calciumsulfat verwendet werden. Im Allgemeinen hat es sich als zweckmäßig erwiesen, bis zu 25 Gew.-% der genannten Flammschutzmittel, bezogen auf die Summe der Komponenten b) bis f) zu verwenden.

Weitere, gegebenenfalls mitzuverwendende Zusatzstoffe f) sind einwertige Alkohole wie Butanol, 2-Ethylhexanol, Octanol, Dodecanol oder Cyclohexanol, die gegebenenfalls zwecks Herbeiführung eines gewünschten Kettenabbruchs mit verwendet werden können. Im Allgemeinen liegen in den Reaktionsgemischen jedoch keine derartigen einwertigen Alkohole vor.

Zur Verbesserung der Oberflächenqualität des Formkörpers kann eine "Gasbeladung" des Reaktionsgemisches vorgenommen werden. Sie erfolgt dergestalt, dass man dem Gemisch aus den Komponenten b) bis f) mittels einer Venturidüse oder mittels eines Hohlrührers (gemäß DE-OS 32 44 037) das Gas in einer Menge von mindestens 10 Vol.-%, vorzugsweise von mindestens 20 Vol.-% (bezogen auf Normaldruck) einverleibt.

Nähere Angaben über die üblichen Hilfs- und Zusatzstoffe sind der Fachliteratur, beispielsweise dem Kunststoff-Handbuch, Band VII "Polyurethane", 3. Auflage, Carl Hanser Verlag, München / Wien, 1993, Seite 104ff. zu entnehmen.

Zur Durchführung des erfindungsgemäßen Verfahrens werden die Komponenten b) bis d) zu einer "Polyolkomponente" abgemischt, die dann mit der Polyisocyanatkomponente a) nach dem Giessverfahren verarbeitet wird. Die gegebenenfalls mit zu verwendenden Katalysatoren e) und die gegebenenfalls mit zu verwendenden Hilfs- und Zusatzmittel f) werden im Allgemeinen der "Polyolkomponente" bzw. einer oder mehreren der Komponenten b) bis d) vor der Herstellung der "Polyolkomponente" zugesetzt, jedoch ist dies nicht zwingend erforderlich, da mit der Polyisocyanatkomponente a) verträgliche Katalysatoren bzw. Hilfs- und Zusatzmittel auch dieser einverleibt werden können.

Bevorzugt weist entweder die Komponente a) und/oder die aus den Komponenten b) bis d) bestehende "Polyolkomponente" einen gewissen Verzweigungsgrad auf. So sollte bei der Verwendung von difunktionellen Polyisocyanaten, d.h. von Diisocyanaten als Komponente a), die mittlere Funktionalität der "Polyolkomponente" bevorzugt mindestens 2,30 betragen. Bei Verwendung von ausschließlich difunktionellen Aufbaukomponenten b) bis d) sollte die Polyisocyanatkomponente bevorzugt eine NCO-Funktionalität von mindestens 2,30 aufweisen. Unter Zugrundelegung einer Isocyanatkennzahl von 100 sollte die mittlere Funktionalität aller Aufbaukomponenten, d.h. das arithmetische Mittel der Funktionalität der Komponente a) und der mittleren Funktionalität der "Polyolkomponente" bevorzugt mindestens 2,15 sein.

Die Mengenverhältnisse der Reaktionskomponenten werden bei der Durchführung des erfindungsgemäßen Verfahrens so bemessen, dass im Reaktionsgemisch eine Isocyanat-Kennzahl von 70 bis 140, vorzugsweise von 95 bis 125 vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100.

Das bei der Durchmischung der Reaktionskomponenten entstehende Gemisch wird in die jeweilige Form eingebracht. Die Menge des in die Form eingetragenen Gemischs wird im Allgemeinen so bemessen, dass die erhaltenen Formkörper eine Dichte von 1,0 bis 1,2 g/cm³ aufweisen. Insbesondere bei Mitverwendung von mineralischen Füllstoffen können Formkörper mit einer über 1,2 g/cm³ liegenden Dichte resultieren. Als Ausgangstemperatur des in die Form eingebrachten Gemisches wird im Allgemeinen der Bereich von 20 bis 80°C, vorzugsweise 20 bis 40°C, gewählt. Die Temperatur der Form beträgt im Allgemeinen 20 bis 100°C, vorzugsweise 20 bis 70°C. Die Formkörper können im Allgemeinen nach einer Formstandzeit von 3 bis 5 Minuten entformt werden.

Das erfindungsgemäße Verfahren eignet sich insbesondere zur Herstellung hochwertiger steifer Formkörper, z.B. technischer Gehäuse oder Möbelteile.

### Beispiele

Die Verarbeitung der in den nachstehenden Beispielen eingesetzten Reaktionskomponenten erfolgte nach dem Gießverfahren. Die Aufbaukomponenten b) bis d) mit gegenüber lsocyanatgruppen reaktionsfähigen Gruppen wurden vorab unter Einbeziehung der Katalysatoren e) bzw. Hilfs- und Zusatzmittel f) jeweils zu einer "Polyolkomponente" vereinigt und anschließend mit der Polyisocyanatkomponente a) unter Einhaltung einer definierten Isocyanatkennzahl verarbeitet.

Hierbei wurden die Reaktionskomponenten, die bei einer Temperatur von ca. 25°C gehalten wurden, mit Hilfe eines 2-Komponenten-Dosiermischgerätes bzw. durch Einwiegen in einen Mischbehälter dosiert und intensiv vermischt, so dass möglichst keine Luftblasen in das Reaktionsgemisch eingerührt werden. Das Reaktionsgemisch wurde dann in ein Werkzeug eingefüllt. Das Werkzeug aus Epoxidharz wies vor dem Befüllen eine Temperatur von 25°C auf, wobei die Innenwände mit einem äußeren Formtrennmittel beschichtet worden waren.

Die Reaktionszeit des Polyurethan-Systems ist abhängig von der Vermischungsintensität und der Rohstofftemperatur und betrug unter den gegebenen Bedingungen ca. 35 Sekunden. Nach einer Entformungszeit von ca. 3 Minuten wurden die Formteile dem Werkzeug entnommen. Nach dem Abkühlen können sie sofort benutzt bzw. geprüft werden.

### Rohstoffe

- Polyisocyanat a1):: Polyisocyanatgemisch der Diphenylmethanreihe, hergestellt durch Phosgenierung eines Anilin / Formaldehyd - Kondensats; NCO-Gehalt: 31,8 Gew.-%, mittlere NCO-Funktionalität: 2,8; Viskosität (25°C): 100 mPa.s.
- Polyisocyanat a2):: Umsetzungsprodukt aus einem Polyesterpolyol aus Ölsäure, Adipinsäure und Pentaerythrit mit einerm zahlenmittleren Molekulargewicht von 1100 g/mol und einem Polyisocyanatgemisch der Diphenylmethanreihe, hergestellt durch Phosgenierung eines Anilin / Formaldehyd - Kondensats; NCO-Gehalt: 28 Gew.-%; Viskosität (25°C): 403 mPa.s.
- Komponente b):: Propoxylierungsprodukt von Ethylendiamin, zahlenmittleres Molekulargewicht: 356 g/mol, Funktionalität: 4.
- Komponente c1):: Polyetherpolyol, hergestellt durch Alkoxylierung von Tri-methylolpropan unter Verwendung eines Gemisches aus Propylenoxid und Ethylenoxid im Gewichtsverhältnis 74 :16 und anschließende Propoxylierung des Alkoxylierungsprodukts unter Verwendung von 10 Gew.-% Propylenoxid, bezogen auf die Gesamtmenge der eingesetzten Alkylenoxide. Zahlenmittleres Molekulargewicht: 3740 g/mol, Funktionalität: 3.
- Komponente c2):: Propoxylierungsprodukt von 1,2-Propylenglykol, zahlenmittleres Molekulargewicht: 2004 g/mol, Funktionalität: 2.
- Komponente d):: Ethoxylierungsprodukt von Trimethylolpropan, zahlenmittleres Molekulargewicht: 660 g/mol, Funktionalität: 3.
- Komponente e):: 1,4-Diazabicyclo[2.2.2]octan in Dipropylenglykol (33 Gew.-%).
- Komponente f1):: Zeolith (Baylith® -T-Paste, Bayer AG).
- Komponente f2):: Polyethersiloxan (Tegostab® B 8411, Goldschmidt AG, D-45127 Essen).

Die Komponenten wurden in den in Tabelle 1 angegebenen Mengen zur Umsetzung gebracht. Biegemodul und Schlagzähigkeit wurden nach ASTM-D 790 bzw. DIN EN ISO 179/1 bestimmt.

**Tab. 1**

| Komponente \ Beispiel | Dimension | 1 | 2 | 3 | 4 |
|---|---|---|---|---|---|
| Komponente b) | [Gew.-Tle.] | 49 | 49 | 49 | 44 |
| Komponente c1) | [Gew.-Tle.] | 33 | 33 | | |
| Komponente c2) | [Gew.-Tle.] | | | 33 | 27 |
| Komponente d) | [Gew.-Tle.] | 15 | 15 | 15 | 27 |
| Komponente e) | [Gew.-Tle.] | 1 | | | 0,3 |
| Komponente f1) | [Gew.-Tle.] | 3 | 3 | 3 | |
| Komponente f2) | [Gew.-Tle.] | | | | 1 |
| OH - Zahl ("Polyol") | [mg KOH/g] | 358 | 356 | 360 | 361 |
| Komponente a1) | [Gew.-Tle.] | 100 | 100 | 103 | |
| Komponente a2) | [Gew.-Tle.] | | | | 111 |
| Reaktionszeit | [sec] | 35 | 35 | 35 | 35 |
| Entformungszeit | [min] | 3 | 3 | 3 | 3 |
| Biege-E-Modul | [N/mm²] | 2253 | 2256 | 2287 | 1899 |
| Schlagzähigkeit | [kJ/m²] | 41 | 56 | 47 | 79 |

## Patentansprüche

1. Verfahren zur Herstellung von massiven Polyurethan-Formkörpern mit einem Biege-E-Modul > 1800 N/mm² (gemäß DIN 53 457) nach dem Gießverfahren, bei dem
a) Di- und/oder Polyisocyanate der Diphenylmethanreihe mit einer Polyolkomponente enthaltend
b) 30 bis 70 Gew.-%, bezogen auf das Gewicht der Komponenten b) bis d), an Polyetherpolyolen mit einem zahlenmittleren Molekulargewicht von 149 bis 999 g/mol, die mit aliphatischen Aminen gestartet sind,
c) 25 bis 50 Gew.-%, bezogen auf das Gewicht der Komponenten b) bis d), an Polyethern mit einem zahlenmittleren Molekulargewicht von 1000 bis 16000 g/mol, mit mindestens einer gegenüber Isocyanatgruppen reaktionsfähigen Gruppe, die höchstens 80% primäre Hydroxylgruppen aufweisen,
d) 0 bis 30 Gew.-%, bezogen auf das Gewicht der Komponenten b) bis d), an mit Polyhydroxylverbindungen gestarteten Polyetherpolyolen mit einem (zahlenmittleren) Molekulargewicht von 62 bis 999 g/mol, gegebenenfalls in Gegenwart von
e) die Isocyanat-Additionsreaktion beschleunigenden Katalysatoren, und gegebenenfalls
f) aus der Polyurethanchemie bekannten Hilfs- und Zusatzstoffen,
umgesetzt werden, wobei man die Art und Mengenverhältnisse der Komponenten b) bis d) so wählt, dass die mittlere Hydroxylzahl des aus diesen Komponenten gebildeten Gemischs größer als 300 mg KOH/g ist.

## Claims

1. Process for producing solid polyurethane mouldings with a flexural modulus of elasticity > 1800 N/mm² (according to DIN 53 457) by the casting process, in which
a) diisocyanates and/or polyisocyanates from the diphenylmethane series are reacted with a polyol component containing
b) 30 to 70 wt.%, relative to the weight of components b) to d), of polyether polyols with a number-average molecular weight of 149 to 999 g/mol, which are started with aliphatic amines,
c) 25 to 50 wt.%, relative to the weight of components b) to d), of polyethers with a number-average molecular weight of 1000 to 16000 g/mol, having at least one group capable of reacting with isocyanate groups and displaying a maximum of 80 % of primary hydroxyl groups,
d) 0 to 30 wt.%, relative to the weight of components b) to d), of polyether polyols started with polyhydroxyl compounds and having a (number-average) molecular weight of 62 to 999 g/mol, optionally in the presence of
e) catalysts that accelerate the isocyanate addition reaction, and optionally
f) auxiliary substances and additives known from polyurethane chemistry,
whereby the type and proportions of components b) to d) are selected such that the average hydroxyl value of the mixture formed from these components is greater than 300 mg KOH/g.

## Revendications

1. Procédé pour la fabrication d'objets moulés massifs en polyuréthanne à un module d'élasticité à la flexion supérieur à 1 800 N/mm² (selon norme allemande DIN 53 457) par la technique de coulée, dans lequel on fait réagir
a) des di- et/ou poly-isocyanates de la série du diphénylméthane avec un composant polyol contenant
b) 30 à 70 % en poids, par rapport au poids des composants b) à d), de polyéther-polyols à un poids moléculaire moyen, moyenne en nombre, de 149 à 999 g/mol, condensés sur 1 mol de départ d'une amine aliphatique,
c) 25 à 50 % en poids, par rapport au poids des composants b) à d), de polyéthers à un poids moléculaire moyen, moyenne en nombre, de 1 000 à 16 000 g/mol, contenant au moins un groupe réactif avec les groupes isocyanate, et au maximum 80 % de groupes hydroxy primaires,
d) 0 à 30 % en poids, par rapport au poids des composants b) à d), de polyéther-polyols condensés sur 1 mol de départ d'un composé polyhydroxylé, à un poids moléculaire moyen (moyenne en nombre) de 62 à 999 g/mol, le cas échéant en présence de
e) des catalyseurs accélérant la réaction d'addition des isocyanates, et le cas échéant
f) des produits auxiliaires et additifs connus dans la chimie des polyuréthannes,
la nature et les quantités des composants b) à d) étant choisies en sorte que l'indice d'hydroxyle moyen du mélange formé de ces composants soit supérieur à 300 mg de KOH/g.
